(19) Europäisches Patentamt / European Patent Office / Office européen des brevets

(11) **EP 2 748 812 B2**

(12) **NOUVEAU FASCICULE DE BREVET EUROPEEN**
Après la procédure d'opposition

(45) Date de publication et mention de la décision concernant l'opposition:
**21.05.2025 Bulletin 2025/21**

(45) Mention de la délivrance du brevet:
**19.08.2020 Bulletin 2020/34**

(21) Numéro de dépôt: 12750370.4

(22) Date de dépôt: **21.08.2012**

(51) Classification Internationale des Brevets (IPC):
**B32B 7/02** (2019.01) **B32B 27/06** (2006.01)
**B32B 27/12** (2006.01) **G10K 11/168** (2006.01)

(52) Classification Coopérative des Brevets (CPC):
**B32B 7/02; B32B 27/065; B32B 27/12; G10K 11/168;** B32B 2307/102; B32B 2307/50; B32B 2307/7244; B32B 2605/08

(86) Numéro de dépôt international:
**PCT/EP2012/066257**

(87) Numéro de publication internationale:
**WO 2013/026847 (28.02.2013 Gazette 2013/09)**

(54) **ENSEMBLE D'INSONORISATION, NOTAMMENT POUR UN VÉHICULE AUTOMOBILE**

LÄRMSCHUTZBAUGRUPPE, INSBESONDERE FÜR EIN KRAFTFAHRZEUG

SOUNDPROOFING ASSEMBLY, IN PARTICULAR FOR A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.08.2011 FR 1157500**

(43) Date de publication de la demande:
**02.07.2014 Bulletin 2014/27**

(73) Titulaire: **Adler Pelzer France Grand-Est 08210 Mouzon (FR)**

(72) Inventeurs:
• **BISCHOFF, Lars**
**22765 Hamburg (DE)**
• **DUVAL, Arnaud**
**08000 Charleville-Mezieres (FR)**

(74) Mandataire: **Lavoix**
**2, place d'Estienne d'Orves**
**75441 Paris Cedex 09 (FR)**

(56) Documents cités:
**EP-A1- 2 159 786 WO-A2-2010/094897
US-A- 6 145 617**

EP 2 748 812 B2

**Description**

La présente invention concerne un ensemble d'insonorisation, notamment pour véhicule automobile selon le préambule de la revendication 1.

Un tel ensemble est destiné à résoudre les problèmes acoustiques qui se posent dans un espace sensiblement clos, tel que l'habitacle d'un véhicule automobile (tapis, pavillon, panneau de porte etc), au voisinage de sources de bruit telles qu'un moteur (tablier etc), le contact de pneumatiques avec une route (passage de roue etc), etc.

En général, dans le domaine des basses fréquences, les ondes acoustiques engendrées par les sources de bruit précitées subissent un « amortissement » par des matériaux sous forme de feuilles simples ou doubles (sandwich précontraint) ayant un comportement visco élastique ou par atténuation acoustique d'un système masse-ressort poreux et élastique.

Au sens de la présente invention, un ensemble d'insonorisation assure une « isolation » lorsqu'il empêche l'entrée d'ondes acoustiques à moyennes et hautes fréquences dans l'espace insonorisé, essentiellement par réflexion des ondes vers les sources de bruit ou l'extérieur de l'espace insonorisé.

Un ensemble d'insonorisation fonctionne par « absorption acoustique » (dans le domaine des moyennes et hautes fréquences) lorsque l'énergie des ondes acoustiques se dissipe dans un matériau absorbant.

Un ensemble d'insonorisation performant doit fonctionner à la fois en assurant une bonne isolation et par absorption. Pour caractériser la performance d'un tel ensemble, on utilise la notion d'indice de réduction sonore NR qui prend en compte les deux notions d'isolation et d'absorption : cet indice peut être calculé par l'équation suivante :

$$NR(dB) = TL - 10\log(S/A)$$

Où TL est l'indice d'affaiblissement acoustique (ci-après indice d'affaiblissement) traduisant l'isolation. Plus cet indice est élevé, meilleure est l'isolation

A est la surface d'absorption équivalente. Plus A est élevé, meilleure est l'absorption.

Pour réaliser une bonne insonorisation, par exemple pour un habitacle automobile, il est souhaitable de mettre en œuvre un ensemble de matériaux qui permettront de jouer judicieusement sur ces deux notions. Ceci a été décrit dans de nombreux articles, en particulier dans l'article « Faurecia Acoustic Light-weight Concept » par A Duval de 2002 lors de la conférence SIA/CTTM 2002 au Mans.

Pour fournir une bonne isolation acoustique, il est connu d'utiliser des ensembles de type masse-ressort formés d'une couche poreuse et élastique de base, sur laquelle est disposée une couche imperméable de masse lourde. Cette couche imperméable de masse lourde présente généralement une masse surfacique élevée, notamment supérieure à 1 kg/m$^2$., et une masse volumique également élevée de l'ordre de 1500 Kg/m$^3$ à 2000 kg/m$^3$.

De tels ensembles acoustiques fournissent une bonne isolation acoustique, mais sont relativement lourds. Par ailleurs leur comportement est très peu performant en absorption.

Par ailleurs pour abaisser la masse d'un ensemble d'insonorisation, US-6 145 617 décrit un ensemble acoustique de type « bi-perméable », dans laquelle la couche de masse lourde est remplacée par une couche poreuse. Un tel ensemble allège effectivement la structure du véhicule, mais s'avère être surtout efficace en absorption et ne fournit pas une isolation satisfaisante, comparée à un système masse-ressort traditionnel.

De nombreuses tentatives ont été réalisées pour proposer un ensemble d'insonorisation qui soit à la fois suffisamment léger et suffisamment efficace en isolation et en absorption, c'est-à-dire proposant un bon indice d'affaiblissement quelques soient les fréquences.

Cependant les performances des solutions avancées restent encore insuffisantes, ceci essentiellement à cause du comportement en isolation qui laisse à désirer.

EP 2 159 786 et WO 2010/094897 décrivent d'autres ensembles du type précité.

Un but de l'invention est donc d'obtenir un ensemble d'insonorisation pour véhicule automobile, qui soit très léger, tout en garantissant un bon indice d'affaiblissement essentiellement grâce à une isolation acoustique sensiblement équivalente à celle d'un système masse-ressort.

A cet effet, l'invention a pour objet un ensemble selon la revendication 1.

L'ensemble selon l'invention peut comprendre l'une ou plusieurs des caractéristiques des revendications 2 à 15.

Selon l'invention, la raideur à la flexion est supérieure à 0,4 N.m.

Avantageusement, la raideur à la flexion est supérieure à 0,6 N.m.

L'invention sera mieux comprise à la lecture de la description qui va suivre, donnée uniquement à titre d'exemple, et faite en se référant aux dessins annexés, sur lesquels :

-   la figure 1 est une vue en coupe transversale d'un premier ensemble d'insonorisation selon l'invention, disposé sur une surface d'un véhicule automobile ;
-   la figure 2 est un graphe représentant l'indice d'affaiblissement en champ diffus pour un ensemble selon l'invention, comparé à celui d'un ensemble masse-ressort, et comparé à un ensemble bi-perméable;
-   la figure 3 est un graphe représentant l'indice d'affaiblissement en décibels en champ diffus, en fonction de la fréquence pour un ensemble selon l'invention, comparé avec un ensemble présentant une couche de rigidification de raideur inférieure ;
- la figure 4 est une vue analogue à la figure 1 pour un deuxième ensemble selon l'invention ;
- la figure 5 est une vue analogue à la figure 2 pour le deuxième ensemble selon l'invention ;
- la figure 6 est une vue analogue à la figure 3 pour le deuxième ensemble selon l'invention ; et
- la figure 7 est un graphe représentant le coefficient d'absorption en fonction de la fréquence pour le deuxième ensemble selon l'invention et pour un ensemble quadri-couche état de la technique de type « Light Weight Concept ».

Dans tout ce qui suit, les orientations sont généralement les orientations habituelles d'un véhicule automobile. Toutefois, les termes « au dessus », « sur », « en dessous », « sous », « supérieur » et « inférieur » s'entendent de manière relative, par rapport à la surface de référence du véhicule automobile, en regard de laquelle est disposé l'ensemble d'insonorisation. Le terme « inférieur » s'entend ainsi comme étant situé le plus près de la surface et le terme « supérieur » comme étant situé le plus éloigné de cette surface.

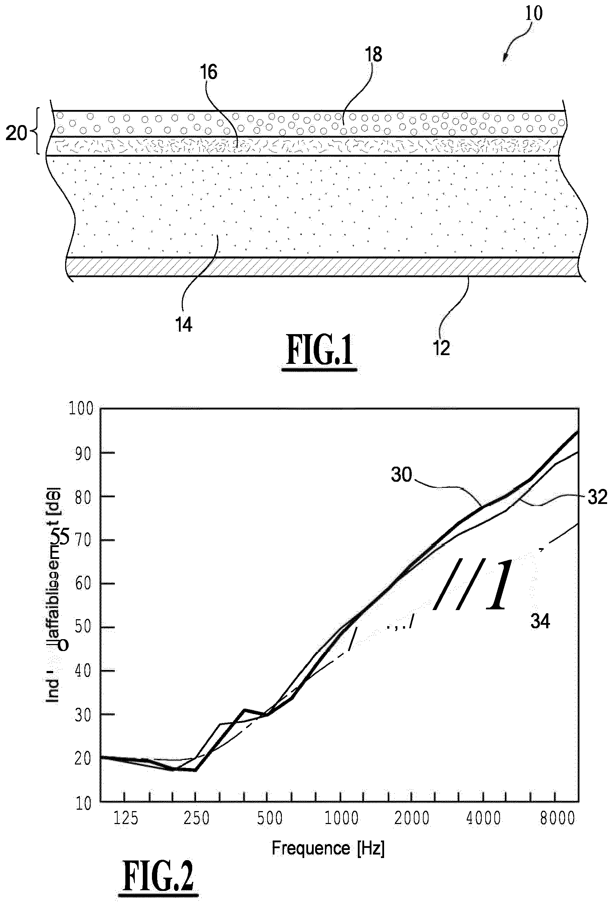

Un premier ensemble d'insonorisation 10 selon l'invention est représenté sur la figure 1. Cet ensemble 10 est destiné à être disposé en regard d'une surface 12 d'un véhicule automobile.

La surface 12 est par exemple une surface métallique en tôle du véhicule définissant notamment un plancher, un plafond, une porte, un tablier séparant l'habitacle du compartiment moteur, un capot, ou un passage de roue de véhicule automobile.

L'ensemble 10 est destiné à être appliqué directement sur la surface. Il peut être fixé sur la surface 12, avantageusement au moyen de pions (par exemple dans le cas d'un tablier) ou posé sur celle-ci (par exemple dans le cas d'un tapis). Dans une variante, l'ensemble est collé sur la surface 12.

Comme illustré par la figure 1, l'ensemble d'insonorisation 10 comporte, de bas en haut sur la figure 1, une couche ressort de base 14 poreuse et élastique, une couche intermédiaire étanche 16 d'isolation et une couche de rigidification 18, les couches 16 et 18 formant un complexe 20 se substituant à une couche de masse lourde.

En variante (non représentée), l'ensemble d'insonorisation 10 comporte en outre une couche décorative, comme par exemple un décor ou une moquette disposée au dessus de la couche 18.

Dans cet exemple, la couche ressort de base 14 est réalisée à base d'une mousse poreuse élastique ou encore viscoélastique

Cette mousse est avantageusement a cellules ouvertes. Elle est par exemple réalisée en polyuréhane. Cette mousse est avantageusement injectée.

La couche ressort de base 14 est poreuse et présente une porosité adaptée pour présenter une résistivité au passage de l'air avantageusement comprise entre 10000 N.m-4.s et 90000 N.m-4.s notamment égale à environ 30000 N.m-4.s_

La résistance au passage de l'air ou sa résistivité est mesurée par la méthode décrite dans la thèse "Mesures des paramètres caractérisant un milieu poreux. Etude expérimentale du comportement acoustique des mousses aux basses fréquences.", Michel HENRY, soutenue le 3 octobre 1997 à l'Université du Mans.

Dans le cas de la mousse, la masse volumique de la couche 14 est comprise entre 30 kg/m$^3$ et 70 kg/m$^3$ et notamment environ 50 kg/m$^3$.

L'épaisseur de la couche ressort de base 14, prise perpendiculairement à la surface 12, est avantageusement comprise entre 5 mm et 30 mm, par exemple entre 10 mm et 15 mm.

Pour présenter des propriétés de ressort, la couche ressort de base 14 présente avantageusement un module élastique supérieur à 10000 Pa. Ce module est avantageusement compris entre 20000 Pa et 100000 Pa, notamment entre 30000 Pa et 40000 Pa.

La couche poreuse de rigidification 18 est formée par exemple par un feutre comprimé rigide, ou par un textile raide.

Par « feutre », on entend au sens de la présente invention, un mélange de fibres de base et de liant. Les fibres peuvent être des fibres nobles et/ou recyclées, naturelles ou synthétiques, d'une seule ou de plusieurs natures. Des exemples de fibres naturelles pouvant être utilisées sont le lin, le coton, le chanvre, le bambou etc. Des exemples de fibres synthétiques pouvant être utilisées sont les fibres de verre, le kevlar, le polyamide, l'acrylique, le polyester, le polypropylène.

Le liant est par exemple une résine ou des fibres liantes qui présentent un point de fusion inférieur à celui des fibres de base à lier. Des exemples de résines sont les résines époxy, ou les résines phénoliques. Des exemples de fibres liantes sont le polypropylène, le polyéthylène, le polyamide, le polyester, ou les polyesters bicomposants.

Dans une variante, le feutre comprend un pourcentage élevé de microfibres, par exemple plus de 50% et avantageusement 80% de microfibres.

Par « microfibres », on entend des fibres de tailles inférieures à 0,9 dtex, avantageusement 0,7 dtex.

Dans une variante, le feutre contient de la matière recyclée, provenant par exemple de déchets d'origine interne ou externe, notamment de chutes de pièces d'équipements automobiles, de rebus de fabrication, ou de pièces en fin de vie d'un véhicule. Ces déchets sont par exemple broyés et incorporés dans le feutre sous forme de morceaux de matière divisée constituées par des agglomérats, des flocons ou des particules. Les composants des déchets peuvent être séparés avant ou pendant le broyage.

Par textile, on entend une nappe de fibres essentiellement à base de polymère thermoplastique tel le polypropylène, les polyesters ou encore les polyamides assemblées mécaniquement par aiguilletage sans l'utilisation de liants de nature chimique. Une telle nappe peut contenir un pourcentage de fibres recyclées thermoplastiques ou d'origine naturelle.

En variante, la couche poreuse de rigidification 18 est réalisée à base d'une mousse refendue à cellules ouvertes. Elle est par exemple réalisée en polyuréthanne.

Dans une variante, la mousse refendue contient également de la matière recyclée, telle que définie ci-dessus, et/ou de la charge minérale et/ou du 'bio-polyol'.

L'épaisseur de la couche poreuse de rigidification 18 est par exemple comprise entre 1 mm et 15 mm, et est notamment comprise entre 5 mm et 10 mm.

Cette épaisseur est inférieure à 70% de l'épaisseur de la couche ressort de base 14. Avantageusement, cette épaisseur est comprise entre 20% et 50% de l'épaisseur de la couche ressort de base.

Dans le cas d'une couche poreuse de rigidification 18 en feutre, la masse surfacique de la couche 18 est supérieure à $400 g/m^2$ et est comprise entre $400 g/m^2$ et $1800 g/m^2$, avantageusement entre $1000 g/m^2$ et $1400 g/m^2$. Dans le cas d'une couche poreuse de rigidification 18 en mousse, la densité de la couche 18 est comprise avantageusement entre $10 kg/m^3$ et $180 kg/m^3$.

La porosité de cette couche 18 est choisie pour que la résistance au passage de l'air de cette couche soit supérieure à $400 N.m^{-3}.s$ et soit avantageusement comprise entre $400 N.m^{-3}.s$ et $6000 N.m^{-3}.s$, notamment environ comprise entre $2000 N.m^{-3}.s$ et $5000 N.m^{-3}.s$.

Selon l'invention, la couche poreuse de rigidification 18 présente une raideur en flexion B, ramenée à une largeur unitaire, supérieure à 0,4 N.m. Dans un exemple non couvert par l'invention, la couche poreuse de rigidification 18 présente une raideur en flexion B, ramenée à une largeur unitaire, supérieure à 0,01 N.m, notamment comprise entre 0,01 N.m et 10 N.m. Cette raideur en flexion B est par exemple supérieure à 0,1 N.m, et est notamment comprise entre 0,1 N.m et 1 N.m.

La raideur en flexion B peut également être supérieure à 1,5 N.m, notamment supérieure à 3 N.m. Elle peut être comprise entre 1,5 N.m et 2,5 N.m.

La raideur en flexion B est calculée, par l'équation :
$B = E.h3/12$, où h est l'épaisseur de la couche 18, et E est son Module d'Young.

Le Module d'Young ou module d'élasticité est mesuré par exemple par la méthode suivante decrite dans la norme NF EN ISO 527-3

La couche intermédiaire 16 est étanche au passage de l'air. Par « étanche au passage de l'air », on entend que sa résistance au passage de l'air est trop élevée pour être mesurée par la méthode décrite ci-dessus.

La couche intermédiaire 16 présente une épaisseur inférieure à celle de la couche poreuse de rigidification 18, avantageusement une épaisseur inférieure à 50% de l'épaisseur de la couche poreuse de rigidification 18.

La couche intermédiaire 16 présente en outre une épaisseur inférieure à 10% de l'épaisseur de la couche ressort de base 14. L'épaisseur de la couche intermédiaire 16 est par exemple inférieure à 1 mm, et notamment comprise entre 0,1 mm et 0,8 mm.

Selon l'invention, la masse surfacique de la couche intermédiaire 16 est supérieure à $210 g/m^2$. Cette épaisseur masse surfacique est comprise en particulier entre $250 g/m^2$ et $400 g/m^2$.

La masse surfacique de cette couche intermédiaire 16 est en tout état de cause inférieure à $500 g/m^2$, pour être inférieure à celle d'une couche de masse lourde classique. La couche 16 ne joue pas le rôle de masse lourde.

La couche intermédiaire 16 est assemblée sur la couche poreuse de rigidification 18. Avantageusement, la couche intermédiaire 16 est formée par un mélange de la mousse formant la couche ressort de base 14 et du matériau poreux formant la couche poreuse de rigidification 18, ce matériau pouvant être des fibres ou une mousse refendue, comme on l'a vu plus haut.

L'étanchéité de la couche intermédiaire 16 est obtenue par remplissage des pores ou interstices ménagés dans la couche poreuse de rigidification 18 à l'aide du matériau moussant injecté lors de la réalisation de la couche ressort de base 14.

L'épaisseur de la couche intermédiaire 16 dépend ainsi de la porosité de la couche poreuse 18, et de la pression appliquée lors de l'injection de la mousse formant la couche ressort de base 14.

Dans une variante, la couche intermédiaire 16 est formée par un film étanche enduit sur la couche poreuse 18, de type plastisol. Un plastisol est formé par la dispersion d'une résine thermoplastique dans un plastifiant. En chauffant ce mélange les molécules de plastifiant et de polymère s'imbriquent formant un revêtement souple et étanche. Les plastisols les plus répandus sont à base de PVC (poly chlorure de vinyle)

En variante, lorsque la couche poreuse de rigidification 18 est un textile constitué essentiellement de fibres synthétiques thermoplastiques, la couche intermédiaire 16 peut être formée par calandrage du textile pour réaliser une fusion locale du textile au contact de la calandre et former un film étanche.

Dans une autre variante, la couche intermédiaire étanche 16 est formée par extrusion d'un film de matériau thermoplastique sur la couche poreuse pour former une couche étanche de masse inférieure à $500 g/m^2$.

Dans encore une autre variante, la couche intermédiaire étanche 16 est formée par fusion d'un matériau dispersé, par exemple un matériau pulvérulent, préalablement dispersé sur une surface de la couche poreuse de rigidification 18.

En variante, la couche intermédiaire 16 peut être un film léger d'un poids inférieur à $150 g/m^2$ du même type que ceux utilisés pour éviter la pénétration de la mousse, à condition qu'il adhère parfaitement à la couche de rigidification 18.

Sans être lié par une théorie quelconque, les inventeurs estiment que selon l'invention, la couche intermédiaire imperméable 16 assemblée sur la couche poreuse de rigidification 18, fournit, en combinaison avec la couche ressort de base 14, un complexe présentant une isolation analogue à celle d'un ensemble masse-ressort classique.

Cet effet est obtenu avec une masse globale très inférieure ou égale à celle des ensembles de l'état de la technique. La masse surfacique totale de l'ensemble 10 est par exemple inférieure à 2500 g/m$^2$.

Cet ensemble présente en outre une absorption améliorée par rapport à un ensemble de type masse-ressort connu. Ainsi, lorsqu'on voudra apporter des caractéristiques d'absorption supplémentaire à cet ensemble par l'adjonction d'une couche poreuse absorbante, les poids à mettre en œuvre seront moindres que dans le cas de l'ensemble masse-ressort classique.

A titre d'illustration, la figure 2 illustre une courbe 30 représentant l'indice d'affaiblissement en décibels, en fonction de la fréquence, de l'ensemble d'insonorisation 10 en comparaison avec la courbe 32 d'un ensemble de type masse-ressort classique.

L'ensemble 10 selon l'invention comporte une couche ressort de base 14 d'épaisseur égale à 20 mm et de densité égale à 55 kg/m$^3$. La couche 16 intermédiaire est imperméable au passage de l'air. Elle présente une épaisseur sensiblement égale à 0,8 mm et une masse surfacique sensiblement égale à 320 g/m$^2$. La couche poreuse 18 présente une raideur B en flexion ramenée à une largeur unitaire, égale à 0,52 N.m et une résistance au passage de l'air égale à 3500 N.m$^{-3}$.s.

La masse surfacique de cette couche 18 est de 1200 g/m$^2$ et son épaisseur est de 4.2 mm.

La couche intermédiaire 16 est formée par imprégnation de la mousse formant la couche ressort de base 14 dans la couche poreuse 18.

Le premier ensemble de l'état de la technique, représenté par la courbe 32, est formé par une couche ressort de base 14 analogue à celle de l'ensemble 10 selon l'invention.

La couche intermédiaire 16 et la couche de rigidification 18 sont remplacées par une couche de masse lourde unique, de masse égale à 1500 g/ m$^2$.

Le deuxième ensemble de l'état de la technique, représenté par la courbe 34 sur la figure 2 comporte une couche ressort de base analogue à la couche 14 décrite précédemment, et une couche de rigidification 18 analogue à celle de l'ensemble d'insonorisation 10 selon l'invention. Il est par contre dépourvu de couche intermédiaire 16 imperméable.

Comme l'illustre la figure 2, l'ensemble selon l'invention 10 presente une isolation comparable à celle d'un ensemble masse-ressort classique. De manière surprenante, il présente une isolation améliorée significativement par rapport à un ensemble bi-perméable de l'état de la technique.

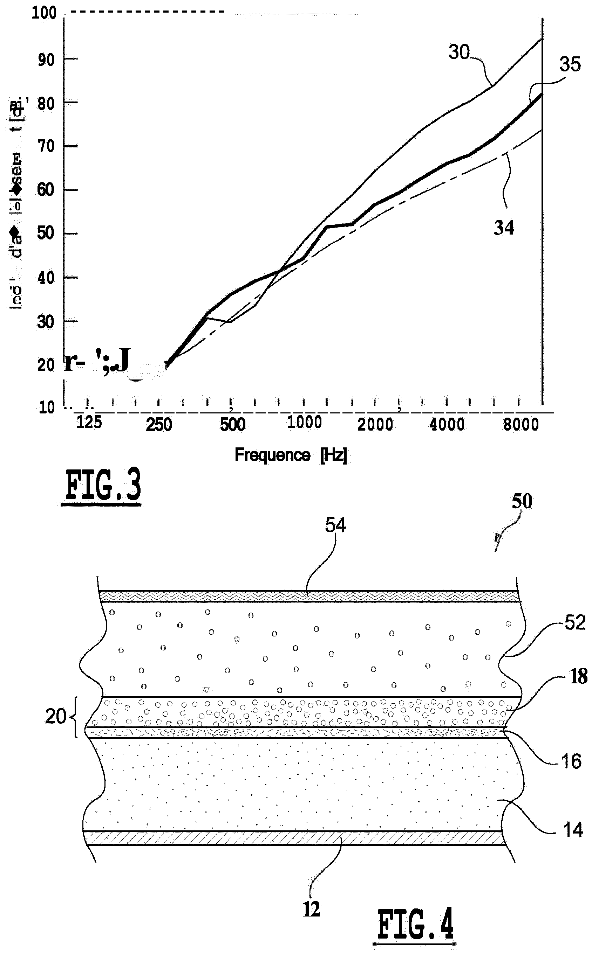

La figure 3 illustre l'effet de la raideur en flexion B de la couche poreuse de rigidification 18. Comme illustré par la figure 3, si la couche de rigidification 18 présente une raideur en flexion B inférieure à celle revendiquée (courbe 35, sur laquelle la raideur en flexion du complexe est de 6,25 x 10$^{-5}$ N.m), l'isolation diminue très significativement.

Il résulte donc des figures 2 et 3 qu'un effet synergique est obtenu entre, d'une part, la couche de rigidification 18 présentant une raideur en flexion B élevée, et d'autre part, la couche intermédiaire imperméable 16 pour produire un effet acoustique équivalent à celui d'une couche de masse lourde. Cet effet est obtenu de manière particulièrement surprenante.

Un deuxième ensemble d'insonorisation 50 selon l'invention est illustré par la figure 4. A la différence du premier ensemble 10, le deuxième ensemble 50 présente une couche poreuse élastique supérieure 52 disposée sur la couche poreuse de rigidification 18, et avantageusement, une couche résistive supérieure 54.

La couche poreuse supérieure 52 est destinée à présenter de bonnes propriétés d'absorption. Elle présente une résistivité au passage de l'air comprise entre 10000 N.m$^4$ .Set 140000 N.m$^4$ .S.

L'épaisseur de la couche supérieure poreuse 52 est supérieure à celle de la couche poreuse de rigidification 18, par exemple supérieure à 150% de l'épaisseur de la couche poreuse de rigidification 18. Cette épaisseur est également supérieure à celle de la couche intermédiaire 16.

L'épaisseur de la couche poreuse supérieure 52 est par exemple supérieure à 5 mm, et est notamment comprise entre 5 mm et 30 mm, en particulier entre 5 mm et 10 mm. Dans l'exemple représenté sur la figure 4, la couche poreuse supérieure 52 est formée par un feutre absorbant.

La masse surfacique de la couche 52 est par exemple comprise entre 200 g/m$^2$ et 2000 g/m$^2$, notamment entre 200 g/m$^2$ et 800 g/m$^2$. La couche 52 est par exemple formée par un feutre comprenant des microfibres, comme par exemple plus de 50%, avantageusement plus de 80% en masse de microfibres, telles que définies plus haut.

En variante, la couche poreuse supérieure 52 est réalisée à base d'une mousse à cellules ouvertes, par exemple en une mousse à cellules ouvertes de polyuréthanne. Elle est refendue. En variante, elle contient de la matière recyclée, telle que définie plus haut ou/et du bio-polyol.

Dans ce cas, la masse volumique de la mousse est par exemple comprise entre 10 kg/m$^3$ et 80 kg/m$^3$, avantageusement et sensiblement egale a 50 kg/m$^3$.

Cette mousse peut présenter une tortuosité élevée, notamment supérieure à 1,4 et avantageusement comprise entre 1,4 et 3 telle que décrite dans la demande WO-2007/006950 de la Demanderesse. Cette tortuosité est mesurée par la détermination de la pente de la courbe représentant la variation du carré de l'indice de réfraction pour la longueur d'onde acoustique utilisée, en fonction de l'inverse de la racine carrée de la fréquence.

La couche supérieure résistive 54 est par exemple réalisée à base d'un non-tissé résistif ou d'un matériau ayant une resistance au passage de l'air contrôlée (par exemple, un feutre de faible grammage, un textile de préférence calandré etc), fixé sur la couche poreuse 52.

Elle présente une masse surfacique comprise entre 20 g/m$^2$ et 200 g/m$^2$, avantageusement 100 g/m$^2$.

Selon l'invention, la couche supérieure résistive 54 est poreuse pour présenter une résistance au passage de l'air faible comprise entre 200 N.m-3.s et 2000 N.m$^{-3}$.s, avantageusement comprise entre 500 N.m$^3$.s et 1200 N.m-3.s_

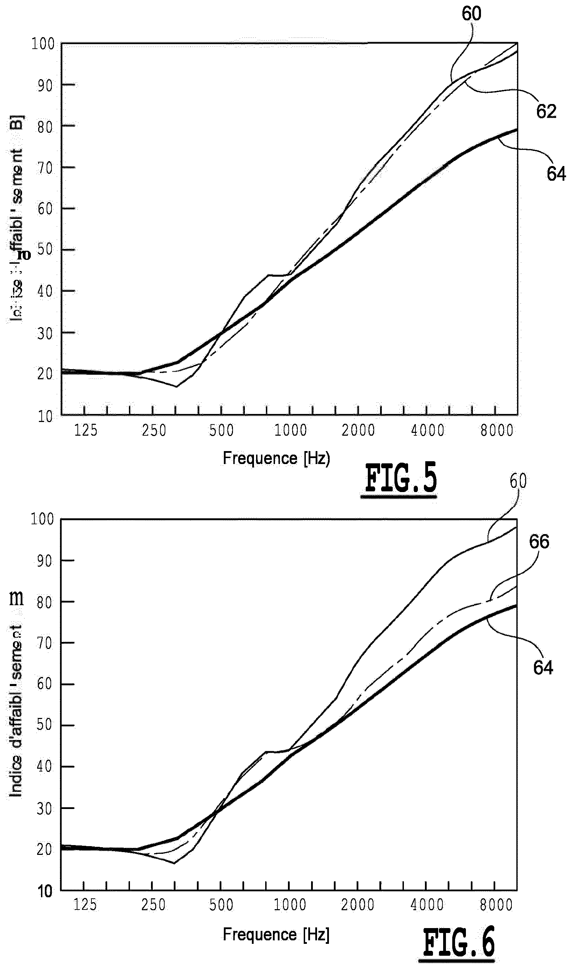

Les figures 5 et 6 illustrent les propriétés de l'ensemble 50 selon l'invention, comparées à celles de deux ensembles de l'état de la technique.

La courbe 60 illustre l'indice d'affaiblissement en fonction de la fréquence pour un ensemble d'insonorisation 50 tel qu'illustré par la figure 4. Cet ensemble 50 comprend une couche ressort de base 14 d'épaisseur égale à 13 mm réalisee en une mousse en polyuréthanne présentant une densité de 55 kg/m$^3$.

La couche poreuse de rigidification 18 présente une épaisseur de 4,2 mm. Elle est réalisée à base d'un feutre comprimé présentant une masse surfacique égale à 1200 g/m$^2$ et une raideur en flexion B égale à 0,52 N.m.

La couche intermédiaire 16 est réalisée par imprégnation de la mousse formant la couche ressort de base 14 dans la couche poreuse 18 pour former une couche impermeable de masse surfacique égale à 320 g/m$^2$, étanche au passage de l'air.

La couche supérieure poreuse élastique 52 présente une épaisseur de 7 mm. Elle est réalisée à base d'un feutre de masse surfacique égale à 400 g/m$^2$.

La couche résistive supérieure 54 est réalisée à base d'un non-tissé résistif de résistance au passage de l'air égale à 1000 N.m-3-s_

A titre de comparaison, la courbe 62 illustre l'indice d'affaiblissement d'un ensemble « Light Weight Concept » de l'état de la technique décrit dans WO2003/069596 comprenant une couche de feutre de masse surfacique égale à 950 g/m$^2$, une couche de masse lourde de masse surfacique égale à 1 kg/m$^2$, une couche poreuse de feutre supérieure de masse surfacique égale à 465 g/m$^2$, et un non-tissé résistif identique à celui de la couche résistive 54.

L'indice d'affaiblissement de l'ensemble selon l'invention 50 est analogue à celui de l'ensemble de l'état de la technique.

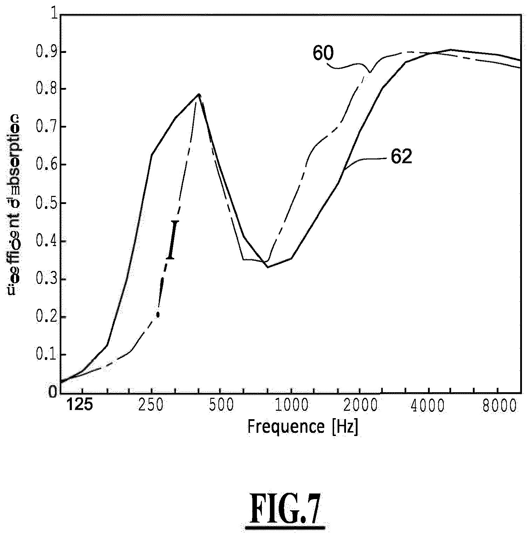

L'ensemble d'insonorisation 50 selon l'invention présente de manière avantageuse une masse inférieure de 20% par rapport à la masse de l'ensemble représenté par la masse-ressort classique, ce qui permet d'alléger le véhicule et de reduire sa consommation. Sur la Figure 7, la courbe 60 de l'ensemble selon l'invention montre en outre que cet ensemble 50 est plus absorbant que l'ensemble de l'état de la technique illustré par la courbe 62 sur la figure.

Par ailleurs, sur la figure 6, la courbe 64 illustre l'indice d'affaiblissement d'un ensemble de l'état de la technique quadri-perméable comportant une couche ressort de base en feutre présentant une masse surfacique égale à 750 g/m$^2$, une couche poreuse de rigidification présentant une masse surfacique égale à 1400 g/m$^2$, une épaisseur égale à 5 mm et une raideur en flexion B analogue à celle de l'ensemble 50 selon l'invention. L'ensemble quadri-perméable présente en outre une couche supérieure poreuse élastique en feutre de masse surfacique égale à 400 g/m$^2$, et un non-tissé résistif identique à celui formant la couche résistive 54 de l'ensemble 50.

Comme l'illustrent les courbes, l'indice d'affaiblissement 60 de l'ensemble 50 selon l'invention est amélioré de manière substantielle et surprenante par rapport à l'ensemble de l'état de la technique représenté par la courbe 64.

En outre, la courbe 66 représentée sur la figure 6 illustre l'indice d'affaiblissement d'un ensemble analogue à celui représenté sur la figure 4, mais dans lequel la raideur de la couche de rigidification 18 est inférieure à 0,01 N.m.

Comme illustré par cette figure, l'indice d'affaiblissement 66 reste alors comparable à celui d'un ensemble quadri-perméable de l'état de la technique, ce qui illustre l'effet synergique entre la couche imperméable 16 et la couche de rigidification 18.

Dans une variante, le premier ensemble d'insonorisation 10 comporte une couche résistive 54 formée par un non tissé résistif tel que décrit plus haut.

Dans d'autres variantes, la couche ressort de base 14 est située au moins partiellement à l'écart de la surface 12 du véhicule automobile. Un interstice gazeux est alors défini entre la surface 12 et la couche ressort de base. Une telle disposition peut exister notamment lorsque la surface 12 constitue un fond de plancher de véhicule automobile ou une partie supérieure de passage de roue.

Dans le cas où l'ensemble 10 est disposé dans un passage de roue, il peut être en outre recouvert par une couche de protection formée par une bi-nappe ou par une moquette de type aiguillé plat pouvant présenter des caractéristiques particulières, par exemple des propriétés hydrophobes et/ou oléophobes et/ou d'hydrorepélance et/ou de tenue au fluide et/ou de résistance aux projections de gravillons.

Dans une variante, une couche de décor formée par une moquette ou un décor est appliquée au-dessus de la couche résistive 54 lorsqu'elle est présente, ou directement au-dessus de la couche supérieure poreuse 52 en l'absence de couche résistive 54.

Un film intermédiaire destiné à realiser une étanchéité à l'eau peut être interposé entre la couche poreuse 52 et la couche de décor.

Dans une variante (non représentée) de l'ensemble 10, une couche de décor formée par une moquette ou un décor textile est appliquée au dessus de la couche poreuse de rigidification 18.

La moquette comporte par exemple une couche de base poreuse et une pluralité de boucles verticalisées.

Plus généralement, l'ensemble selon l'invention peut être utilisé dans un autre véhicule tel qu'un aéronef ou un véhicule de transport ferroviaire, ou dans une structure fixe tel qu'un bâtiment.

## Revendications

1. Ensemble d'insonorisation (10, 50), notamment pour un véhicule automobile, du type comprenant :

   - une couche ressort de base (14), élastique et poreuse, destinée à être placée en regard d'une surface (12), notamment d'un véhicule automobile ;
   - une couche intermédiaire d'isolation (16) étanche au passage de l'air, la couche intermédiaire (16) étant disposée sur la couche ressort de base (14) ;

   dans lequel la couche intermédiaire étanche (16) présente une masse surfacique inférieure à 500 g/m$^2$, notamment comprise entre 50 g/m$^2$ et 400 g/m$^2$, l'ensemble d'insonorisation (10, 50) comportant une couche de rigidification poreuse (18), disposée au contact de la couche intermédiaire étanche (16), et dans lequel la couche de rigidification poreuse (18) présentant une épaisseur inférieure à l'épaisseur de la couche ressort de base (14), **caractérisé en ce que** la couche de rigidification poreuse (18) présente une raideur à la flexion (B), ramenée à une largeur unitaire, supérieure à 0,4 N.m, la masse surfacique de la couche intermédiaire étanche (16) étant supérieure à 210 g/m$^2$.

2. Ensemble (10, 50) selon la revendication 1, **caractérisé en ce que** la raideur à la flexion (B) est comprise entre 0,6 N.m et 1 N.m.

3. Ensemble (10, 50) selon la revendication 1, **caractérisé en ce que** la raideur à la flexion est supérieure à 1,5 N.m, notamment comprise entre 1,5 N.m et 2,5 N.m, notamment supérieure à 3 N.m.

4. Ensemble (10, 50) selon l'une quelconque des revendications précédentes, **caractérisé en ce que** la masse surfacique de la couche poreuse de rigidification (18) est supérieure à 400 g/m$^2$ et est avantageusement inférieure à 1800 g/m$^2$.

5. Ensemble (10, 50) selon l'une quelconque des revendications précédentes, **caractérisé en ce que** la masse surfacique de la couche intermédiaire étanche (16) est comprise entre 250 g/m$^2$ et 400 g/m$^2$.

6. Ensemble (50) selon l'une quelconque des revendications précédentes, **caractérisé en ce qu'**il comporte une couche supérieure poreuse (52) disposée sur la couche poreuse de rigidification (18), la couche supérieure poreuse (52) présentant une épaisseur supérieure à celle de la couche poreuse de rigidification (18)

7. . Ensemble (50) selon la revendication 6, **caractérisé en ce qu'**il comporte une couche résistive extérieure (54) présentant une résistance au passage de l'air comprise entre 200 N.m$^{-3}$.s et 1200 N.m$^{-3}$.s.

8. Ensemble (50) selon l'une des revendications 6 ou 7, **caractérisé en ce qu'**il comporte une couche de décor, avantageusement formée par une moquette ou un décor textile, la couche de décor étant disposée au dessus de la couche supérieure poreuse, ou au dessus de la couche résistive extérieure (54).

9. Ensemble (10) selon l'une quelconque des revendications 1 à 5, **caractérisé en ce qu'**il comporte une couche de décor, avantageusement une moquette ou un décor textile appliquée au dessus de la couche de rigidification poreuse (18).

10. Ensemble (10, 50) selon l'une quelconque des revendications précédentes, **caractérisé en ce que** la couche intermédiaire étanche (16) présente une épaisseur inférieure à l'épaisseur de la couche poreuse de rigidification (18).

11. Ensemble (10, 50) selon l'une quelconque des revendications précédentes, **caractérisé en ce que** la couche ressort de base (14) est formée par une couche de mousse poreuse, la couche intermédiaire étanche (16) étant formée par imprégnation de la mousse formant la couche ressort de base (14) dans la couche poreuse de rigidification (18).

12. Ensemble (10, 50) selon l'une quelconque des revendications 1 à 10, **caractérisé en ce que** la couche intermédiaire étanche (16) est formée par une couche extrudée sur la couche poreuse de rigidification (18).

13. Ensemble (10, 50) selon l'une quelconque des revendications 1 à 10, **caractérisé en ce que** la couche intermédiaire étanche (16) est formée par fusion d'un matériau dispersé déposé sur la couche poreuse de rigidification (18), ou par la fusion locale de la couche poreuse de rigidification (18).

14. Ensemble (10, 50) selon l'une quelconque des revendications précédentes, **caractérisé en ce que** la résistance au passage de l'air de la couche poreuse de rigidification (18) est comprise entre 400 N.m $^{-3}$.s et 6000 N.m $^{-3}$.s, avantageusement entre 2000 N.m $^{-3}$.s et 5000 N.m$^{-3}$.s.

15. Ensemble (10, 50) selon l'une quelconque des revendications précédentes, **caractérisé en ce que** l'épaisseur de la couche poreuse de rigidification (18) est inférieure à 70% de l'épaisseur de la couche ressort de base (14), notamment comprise entre 20% et 50% de l'épaisseur de la couche ressort de base (14), l'épaisseur de la couche intermédiaire étanche (16) étant inférieure ou égale à l'épaisseur de la couche poreuse de rigidification (18).

**Patentansprüche**

1. Schalldämpfungs-Einrichtung (10, 50), insbesondere für ein Kraftfahrzeug, des Typs aufweisend:

   - eine elastische und poröse Basis-Federschicht (14), die dazu bestimmt ist, gegenüber einer Fläche (12), insbesondere von einem Kraftfahrzeug, platziert zu werden,
   - eine Isolations-Zwischenschicht (16), die gegenüber dem Passieren von Luft dicht ist, wobei die Zwischenschicht (16) auf der Basis-Federschicht (14) angeordnet ist,

   wobei die dichte Zwischenschicht (16) eine Flächenmasse hat, die kleiner als 500 g/m$^2$ ist, insbesondere zwischen 50 g/m$^2$ und 400 g/m$^2$ liegt, wobei die Schalldämpfungseinrichtung (10, 50) eine poröse Versteifungsschicht (18) aufweist, die im Kontakt mit der dichten Zwischenschicht (16) angeordnet ist, und wobei die poröse Versteifungsschicht (18) eine Dicke hat, die kleiner als die Dicke der Basis-Federschicht (14) ist, **dadurch gekennzeichnet, dass** die poröse Versteifungsschicht (18) eine Biegesteifigkeit (B) größer als 0,4 Nm hat, rückgeführt auf eine Einheitsbreite, wobei die Flächenmasse der dichten Zwischenschicht (16) größer als 210 g/m$^2$ ist.

2. Einrichtung (10, 50) gemäß Anspruch 1, **dadurch gekennzeichnet, dass** die Biegesteifigkeit (B) zwischen 0,6 Nm und 1Nm liegt.

3. Einrichtung (10, 50) gemäß Anspruch 1, **dadurch gekennzeichnet, dass** die Biegesteifigkeit größer als 1,5 Nm ist, insbesondere zwischen 1,5 Nm und 2,5 Nm liegt, insbesondere größer als 3 Nm ist.

4. Einrichtung (10, 50) gemäß irgendeinem der vorhergehenden Ansprüche, **dadurch gekennzeichnet, dass** die Flächenmasse der porösen Versteifungsschicht (18) größer als 400 g/m$^2$ ist und vorteilhafter weise kleiner als 1800 g/m$^2$ ist.

5. Einrichtung (10, 50) gemäß irgendeinem der vorhergehenden Ansprüche, **dadurch gekennzeichnet, dass** die Flächenmasse der dichten Zwischenschicht (16) zwischen 250 g/m$^2$ und 400 g/m$^2$ liegt.

6. Einrichtung (50) gemäß irgendeinem der vorhergehenden Ansprüche, **dadurch gekennzeichnet, dass** sie aufweist eine poröse obere Schicht (52), die auf der porösen Versteifungsschicht (18) angeordnet ist, wobei die poröse obere Schicht (52) eine Dicke hat, die größer als jene der porösen Versteifungsschicht (18) ist.

7. Einrichtung (50) gemäß Anspruch 6, **dadurch gekennzeichnet, dass** sie eine äußere Widerstandsschicht (54) aufweist, die einen Widerstand gegenüber dem Passieren von Luft hat, der zwischen 200 Nm$^{-3}$s und 1200 Nm$^{-3}$s liegt.

8. Einrichtung (50) gemäß einem der Ansprüche 6 oder 7, **dadurch gekennzeichnet, dass** sie aufweist eine Dekorschicht, vorteilhafterweise gebildet von einem Teppich oder einem Textildekor, wobei die Dekorschicht über der oberen porösen Schicht oder über der äußeren Widerstandsschicht (54) angeordnet ist.

9. Einrichtung (10) gemäß irgendeinem der Ansprüche 1 bis 5, **dadurch gekennzeichnet, dass** sie aufweist eine Dekorschicht, vorteilhafterweise einen Teppich oder ein Textildekor, die über die poröse Versteifungsschicht (18) aufgebracht ist.

10. Einrichtung (10, 50) gemäß irgendeinem der vorhergehenden Ansprüche, **dadurch gekennzeichnet, dass** die dichte Zwischenschicht (16) eine Dicke hat, die kleiner ist als die Dicke der porösen Verstärkungsschicht (18).

11. Einrichtung (10, 50) gemäß irgendeinem der vorhergehenden Ansprüche, **dadurch gekennzeichnet, dass** die Basis-Federschicht (14) gebildet ist von einer porösen Schaumschicht, wobei die dichte Zwischenschicht (16) gebildet ist durch Imprägnierung des die Basis-Federschicht (14) bildenden Schaums in der porösen Versteifungsschicht (18).

12. Einrichtung (10, 50) gemäß irgendeinem der Ansprüche 1 bis 10, **dadurch gekennzeichnet, dass** die dichte Zwischenschicht (16) gebildet ist von einer Schicht, die auf die poröse Versteifungsschicht (18) extrudiert ist.

13. Einrichtung (10, 50) gemäß irgendeinem der Ansprüche 1 bis 10, **dadurch gekennzeichnet, dass** die dichte Zwischenschicht (16) gebildet ist durch Fusion eines verstreuten Materials, das auf der porösen Versteifungsschicht (18) abgelegt ist, oder durch lokale Fusion der porösen Versteifungsschicht (18).

14. Einrichtung (10, 50) gemäß irgendeinem der vorhergehenden Ansprüche, **dadurch gekennzeichnet, dass** der Widerstand gegen das Passieren von Luft der porösen Versteifungsschicht (18) zwischen 400 Nm⁻³s und 6000Nm⁻³s, vorteilhafterweise zwischen 2000 Nm⁻³s und 5000 Nm⁻³s liegt.

15. Einrichtung (10, 50) gemäß irgendeinem der vorhergehenden Ansprüche, **dadurch gekennzeichnet, dass** die Dicke der porösen Versteifungsschicht (18) kleiner als 70% der Dicke der Basis-Federschicht (14) ist, insbesondere zwischen 20% und 50% der Dicke der Basis-Federschicht (14) liegt, wobei die Dicke der dichten Zwischenschicht (16) kleiner oder gleich ist wie die Dicke der porösen Versteifungsschicht (18).

**Claims**

1. A sound proofing assembly (10, 50), notably for an automobile vehicle of the type comprising:

   - an elastic and porous base spring layer (14), intended to be placed facing a surface (12), notably of an automobile vehicle;
   - an intermediate insulation layer (16) impervious to the passage of air, the intermediate layer (16) being positioned on the base spring layer (14);

   wherein the impervious intermediate layer (16) has a surface mass density of less than 500 g/m², notably comprised between 50 g/m² and 400 g/m², the sound proofing assembly (10, 50) including a porous stiffening layer (18) positioned in contact with the impervious intermediate layer (16), and wherein the porous stiffening layer (18) has a smaller thickness than the thickness of the base spring layer (14), **characterized in that** the porous stiffening layer (18) has a flexural stiffness (B), reduced to a unit width, of more than 0.4 N.m, the surface mass density of the impervious intermediate layer (16) being greater than 210 g/m².

2. The assembly (10, 50) according to claim 1, **characterized in that** the flexural stiffness (B) is comprised between 0.6 N.m and 1 N.m.

3. The assembly (10, 50) according to claim 1, **characterized in that** the flexural stiffness is greater than 1.5 N.m, notably comprised between 1.5 N.m and 2.5 N.m, notably greater than 3 N.m.

4. The assembly (10, 50) according to any of the preceding claims, **characterized in that** the surface mass density of the porous stiffening layer (18) is greater than 400 g/m² and is advantageously less than 1800 g/m².

5. The assembly (10, 50) according to any of the preceding claims, **characterized in that** the surface mass density of the impervious intermediate layer (16) is comprised between 250 g/m² and 400 g/m².

6. The assembly (50) according to any of the preceding claims, **characterized in that** it includes a porous upper layer (52) positioned on the porous stiffening layer (18), the porous upper layer (52) having a greater thickness than that of the porous stiffening layer (18).

7. The assembly (50) according to claim 6, **characterized in that** it includes an outer resistive layer (54) having a resistance to the passage of air comprised between 200 N.m⁻³.s and 1200 N.m⁻³.s.

8. The assembly (50) according to one of claims 6 or 7, **characterized in that** it includes a decorative layer, advantageously formed by a carpet or a textile decoration, the decorative layer being positioned above the porous upper layer, or above the outer resistive layer (54).

9. The assembly (10) according to any of claims 1 to 5, **characterized in that** it includes a decorative layer, advantageously a carpet or a textile decoration applied above the porous stiffening layer (18).

10. The assembly (10, 50) according to any of the preceding claims, **characterized in that** the impervious intermediate layer (16) has a smaller thickness than the thickness of the porous stiffening layer (18).

11. The assembly (10, 50) according to any of the preceding claims, **characterized in that** the base spring layer (14) is formed with a porous foam layer, the impervious intermediate layer (16) being formed by impregnation of the foam forming the base spring layer (14) in the porous stiffening layer (18).

12. The assembly (10, 50) according to any of claims 1 to 10, **characterized in that** the impervious intermediate layer (16) is formed by a layer extruded on the porous stiffening layer (18).

13. The assembly (10, 50) according to any of claims 1 to 10, **characterized in that** the impervious intermediate layer (16) is formed by melting a dispersed material deposited on the porous stiffening layer (18), or by local melting of the porous stiffening layer (18).

**14.** The assembly (10, 50) according to any of the preceding claims, **characterized in that** the resistance to passage of air of the porous stiffening layer (18) is comprised between 400 N.m $^{-3}$.s and 6,000 N.m $^{-3}$.s, advantageously between 2,000 N.m $^{-3}$.s and 5,000 N.m $^{-3}$.s.

**15.** The assembly (10, 50) according to any of the preceding claims, **characterized in that** the thickness of the porous stiffening layer (18) is less than 70% of the thickness of the base spring layer (14), notably comprised between 20% and 50% of the thickness of the base spring layer (14), the thickness of the airproof intermediate layer (16) being less than or equal to the thickness of the porous stiffening layer (18).

**FIG.1**

**FIG.2**

**FIG.3**

**FIG.4**

**FIG.5**

**FIG.6**

**FIG.7**

## RÉFÉRENCES CITÉES DANS LA DESCRIPTION

**Documents brevets cités dans la description**

- US 6145617 A
- EP 2159786 A
- WO 2010094897 A
- WO 2007006950 A
- WO 2003069596 A

**Littérature non-brevet citée dans la description**

- **A DUVAL**. Faurecia Acoustic Light-weight Concept. *conférence SIA/CTTM*, 2002
- **MICHEL HENRY**. Mesures des paramètres caractérisant un milieu poreux. Etude expérimentale du comportement acoustique des mousses aux basses fréquences. l'Université du Mans, 03 October 1997